# EUROPEAN PATENT APPLICATION

(11) **EP 2 113 329 A1**
(43) Date of publication of application: **04.11.2009**
(21) Application number: 07737349.6
(22) Date of filing: 23.02.2007
(51) Int. Cl.: B23G 1/46

(54) **TAP HOLDER**

(71) Applicant: Daishowa Seiki Co., Ltd., Osaka 579-8013 (JP); Big Alpha Co., Inc., Sumoto-shi, Hyogo 656-1332 (JP)
(72) Inventor: KOMINE, Tsuyoshi, Higashi-Osaka-shi Osaka 579-8013 (JP); SURUGA, Hirokazu, Higashi-Osaka-shi Osaka 579-8013 (JP)
(74) Representative: Brown, Kenneth Richard
(86) International application number: PCT/JP2007/053410
(87) International publication number: WO 2008/105043

(57) **Abstract**

It is an object of the invention to provide a tap holder in which even when an error is brought about in synchronizing spindle feeding and rotation of a tapper body and a tap collet of a tap holder in correspondence with a machine tool spindle, the spindle feeding and rotation can be synchronized by absorbing the error by a simple constitution. As means therefor, a tap holder 10 including a tap collet 50 for chucking a tap 40 at one end thereof, a tapper body 20 formed with an attaching hollow portion 26 for inserting other end 52 of the tap collet 50, and a fastening nut 70 for pressing the tap collet 50 to the attaching hollow portion 26 to be fixed to the tapper body 20 by being screwed with the tapper body 20 and engaged with one end side end face 54 of the tap collet 50, and attached to a machine tool having a tap synchronizingly feeding mechanism is **characterized in that** the tap collet 50 is squeezed by a bottom face 26a of the attaching recessed portion and the fastening nut 70 by way of elastic members 58 and 78 in an axial direction X.

## Description

### Technical Filed

The present invention relates to a tap holder for holding a tap for tapping and for equipping with a machine tool spindle.

### Background Art

When tapping is carried out by a machine tool by utilizing synchronization with feeding and rotation of a machine tool spindle, rotation and feeding of the machine tool spindle are controlled to synchronize in accordance with a pitch of a tap. However, in actual tapping, owing to a phenomenon referred to as servo delay, an amount of running a tap while machining by rotating becomes larger, or conversely smaller than a tap pitch per rotating the machine tool spindle, tapping is progressed fast or slow by an incoincidence of spindle feeding and rotation, and therefore, a deviation is brought about among an amount of spindle feeding per rotation and a tap pitch. Although in a background art, the incoincidence is prevented by providing floats on both sides in an axial direction of a tap holder, in recent years, the floats are eliminated and the tap holder are an integral structure is constituted by a promotion in an accuracy of synchronizing (synchronizing) spindle rotation and feeding by a development of a mechanism or a control technology.

Further, a tapper holder deals therewith by being separated into a tapper body and a tap collet to allow a size of a tap by the tap collet. Also a synchronized tap holder constituting an object of complete synchronization is separated into a tapper body and a tap collet and when the tapper body and the tap collet are connected, the tap collet is attached thereto as gapless as possible.

However, although a synchronization accuracy of the machine tool is promoted, for example, when a spindle feeding direction and a spindle rotating direction are switched in order to draw a tap from a subject work, rotation of a machine tool spindle does not synchronize with spindle feeding and a small sift of the tap in an axial direction cannot completely be excluded from being brought about, and therefore, there is a drawback of enlarging or leaning a screw thread.

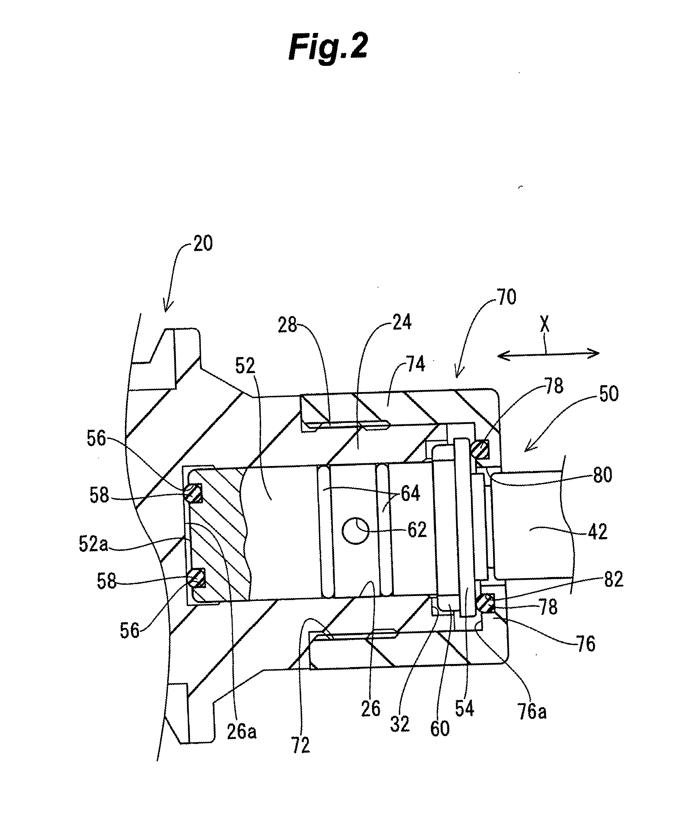

As a constitution of absorbing such a synchronization error, there is proposed a constitution in which a tap mounting portion is made to be movable (able to sift) in an rotating axis direction of a spindle by connecting a spindle mounting portion and the tap mounting portion by way of a leaf spring (refer to Patent Reference 1, paragraph No. [0011] shown below), or a constitution in which as in a background art, a tension spring and a compression spring are urged in directions reverse to each other in an axial direction between a spindle and a tap collet and the tap collet is stopped at a position for balancing urge forces, when an error of feeding the spindle is brought about in tapping and a feed amount and a pitch of a tap are incoincident, the spindle is slid slightly in a direction of making the feed amount and the pitch coincident by reacting with an external force from the tap at a front end thereof (refer to Patent Reference 2, paragraph number [0030], Fig.2 shown below), or a constitution in which a tap driver is provided with a spiral coil having a compressing performance and an extending performance, an attachment main body is moved by a small amount in an axis line direction in accordance with a predetermined force exerted to a tap to be able to synchronize (refer to Patent Reference 3, paragraph number [0018], Fig.2).

However, the constitutions described in Patent References 1 through 3 pose a problem that structures are complicated in any of the cases and cost becomes expensive.
Patent Reference 1: JP-A-7-60544
Patent Reference 2: JP-A-2004-142033
Patent Reference 3: JP-A-2002-46020

### Disclosure of the Invention

### Problems that the Invention is to Solve

The invention has been carried out in consideration of the above-described point and it is an object thereof to provide a tap holder in which in a constitution of separating a tap holder in correspondence with a machine tool spindle to a tapper body and a tap collet, even when an error is brought about in synchronizing feeding and rotation of the machine tool spindle, an error between the tapper body and the tap collet can be absorbed by a simple constitution to synchronize the feeding and the rotation.

### Means for Solving the Problems

A tap holder according to the invention is including a tap collet for chucking a tap at one end thereof, a tapper body formed with an attaching hollow portion for inserting other end of the tap collet, and a fastening nut for pressing the tap collet to the attaching hollow portion to be fixed to the tapper body by being screwed with the tapper body and engaged with an end face on one end side of the tap collet, and attached to a machine tool having a tap synchronizingly feeding mechanism, and characterized by in which the tap collet is squeezed by a bottom face of the attaching hollow portion and the fastening nut by way of an elastic member in an axial direction.

### Advantage of the Invention

According to the invention, an error in synchronizing spindle feeding and rotation of the machine tool spindle can be absorbed by a simple constitution by producing a small amount of movement in an axial direction between a tapper body and the tap collet.

Further, basic constituent elements of the tapper body and the tap collet and the fastening nut and the elastic members are few and can be fabricated with high productivity and inexpensively by a simple structure.

Further, by interchanging the elastic member, a difference in a tap size, a difference in a machined material, wear, or an ageing change can easily be dealt with.

### Best Mode for Carrying Out the Invention

An embodiment of the invention will be explained in reference to the drawings as follows.

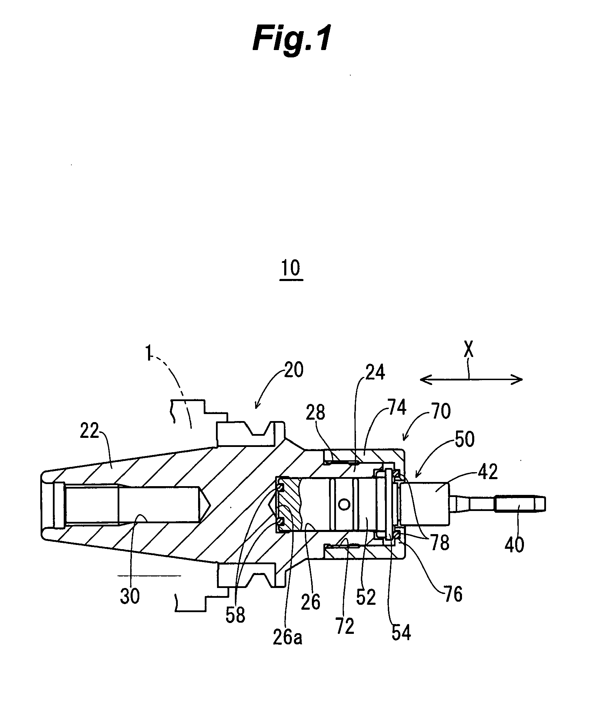

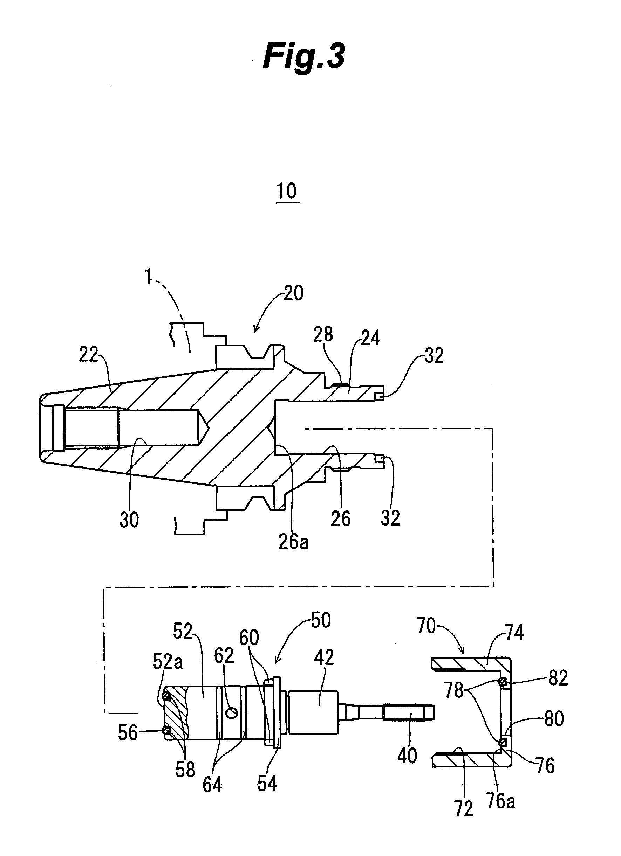

Fig.1 is a sectional view of a tap holder 10 according to the embodiment, Fig.2 is a sectional view enlarging an essential portion of the tap holder 10, and Fig.3 is a disassembled view of the tap holder 10.

The tap holder 10 according to the embodiment is a tap holder for mounting a tap 40 to a machine tool having a tap synchronizingly feeding mechanism, having a tapper body 20 including a shank portion 22 attachably and detachably mounted to a spindle 1 of the machine tool, a tap collet 50 having a tap holding member 42 for holding the tap 40 at a front end thereof, and attachably and detachably attached to the tapper body 20, and a fastening nut 70 for connecting the tap collet 50 to the tapper body 20.

The tapper body 20 is provided with an outer cylinder portion 24 on a front end side thereof integrally with the portion 22, the outer cylinder portion 24 is formed with an attaching hollow portion 26 inserted with a shaft portion 52 of the tap collet 50, and an outer peripheral face of the outer cylinder portion 24 is formed with a male screw portion 28 to be screwed with a female screw portion 72 of the fastening nut 70. Further, a flow path 30 for pressurizing a machining fluid is formed at an inner portion of the tapper body 20, and the flow path 30 is opened to the attaching hollow portion 26.

The tap collet 50 includes the shaft portion 52 slidingly inserted into an inner peripheral face of the attaching hollow portion 26 of the tapper body 20 in a state of being brought into tight contact therewith, and a flange portion 54 provided at a front end side of the shaft portion 52.

An end face 52a of the shaft portion 52 opposed to a bottom face 26a of the attaching hollow portion 26 is formed with a plurality of recessed portions 56, each of the recessed portions 56 is fitted with an elastic member 58 in a spherical shape to project from the end face 52a, and the bottom face 26a of the attaching hollow portion 26 and the elastic member 58 are brought into contact with each other. The elastic member 58 is a member formed by a hard synthetic resin having an elasticity of nylon or the like or rubber or the like, and is removably arranged at the tap collet 50. Further, the shape of the elastic member 58 is not limited to the spherical shape but, for example, may be constituted by various shapes of a cube, an ellipsoid of revolution and the like, further, the end face 52a of the shaft portion 52 may be provided with a recessed groove in a ring-like shape and the recessed groove may be arranged with the elastic member in a ring-like shape of an O ring or the like.

A side of the flange 54 of the tapper body 20 is formed with a projection 60 engaged with a key groove 32 formed at an opening edge of the hollow portion 26, and a rotational shift of the tap collet 50 relative to the tapper body 20 is hampered.

Further, an inner portion of the tap collet 50 is formed with a flow path, not illustrated, for pressurizing a machining fluid, and an opening portion 62 communicating with the flow path is provided at an outer peripheral face of the shaft portion 52. The outer peripheral face of the shaft portion 52 is arranged with a pair of O rings 64 with the opening portion 62 interposed there between, in a state in which the tap collet 50 is connected to fix to the tapper body 20, the flow path formed at the inner portion of the tap collet 50 is communicated with the flow path 30 formed at the inner portion of the tapper body 20, and the machining fluid supplied from a side of a machining tool is pressurized to a blade tip portion of the tap 40 therethrough.

The fastening nut 70 includes a nut body 74 formed with the female screw portion 72 to be screwed with the male screw portion 28 of the tapper body 20 at the inner peripheral face, and the elastic member 78 in the spherical shape extended in an inner diameter direction at the front end side of the nut body 74 and arranged removably to the flange portion 76, and a through hole 80 is formed on an inner side of the flange portion 76. The elastic member 78 is a member formed by a hard synthetic resin having an elasticity of nylon or the like or rubber or the like, and the elastic members 78 are fitted to recessed portion 82 formed at a plurality of portions of the inner face 76a of the flange portion 76 opposed to the flange portion 54 of the collet chuck 50 to project from the inner face 76a. Further, the shape of the elastic member 78 is not limited to the spherical shape but, for example, may be constituted by various shapes of a cube, an ellipsoid of revolution and the like, further, the inner face 76a of the flange portion 76 may be provided with a recessed groove in a ring-like shape, and the elastic member in a ring-like shape of an O ring or the like may be arranged at the recessed groove.

The fastening nut 70 is fixed to the tapper body 20 by inserting the tap 40 and the tap holding member 42 through the through hole 80 in a state of inserting the shaft portion 52 to the attaching hollow portion 26, and screwing the female screw portion 72 with the male screw portion 28 formed at the outer peripheral face of the outer cylinder portion 24.

At that occasion, the elastic member 78 arranged at the inner face 76a of the flange portion 76 of the fastening nut 70 is brought into contact with the flange portion 54 provided on the front end side of the tap collet 50, the tap collet 50 is pressed to the attaching hollow portion 26 in accordance with fastening the fastening nut 70 and the bottom face 26a of the attaching hollow portion 26 and the elastic member 58 arranged at the end face 52a of the shaft portion 52 are brought into contact with each other. Thereby, the tap collet 50 is fixed to the tapper body 20 in a state of being squeezed by the bottom face 26a of the attaching hollow portion 26 and the flange portion 76 of the fastening nut 70 by way of the elastic members 58 and 78 in an axial direction indicated by an arrow mark notation X.

As described above, in the tap holder 10 forthe embodiment, the tap collet 50 is fixed to the tapper body 20 by way of the elastic members 58 and 78 in the axial direction indicated by the arrow mark notation X, and therefore, even when a force in either direction of a pressing direction and a pulling direction is generated at the tap collet 50 by a synchronization error of feeding and rotation of the spindle 1 of the machine tool, the force is operated to the tapper body 20 by way of the elastic members 58 and 78, and highly accurate tapping can be carried out by absorbing a difference between an amount of moving the tapper body 20 and the amount of spontaneously running the tap 40 by elastically deforming the elastic member 78.

Further, the elastic members 58 and 78 are fitted to the recessed portions 56 and 82 and arranged removably, and therefore, when the elastic members 58 and 78 are deteriorated, the elastic members 58 and 78 can be interchanged by new ones thereof, the high tapping function can be maintained over a long period of time, easinesses of bending the elastic members 58 and 78 can be adjusted by changing hardnesses of the elastic members 58 and 78 attached to the recessed portion 56 and 82, and the tap holder 10 suitable for machining various kinds of materials can be provided.

Furthermore, for example, the elastic member 58 and the elastic member 78 may be constituted by elastic members having different hardnesses such that, for example, the elastic member 58 brought into contact with the bottom face 26a of the attaching hollow portion 26 may be provided with a hardness higher than that of the elastic member 78 brought into contact with the flange portion 54 of the tap collet 50, thereby, the easinesses of bending the elastic members can respectively separately be adjusted by a case of operating the force in the pressing direction to the tap collet 50 and a case of operating the force in the pulling direction to the tap collet 50.

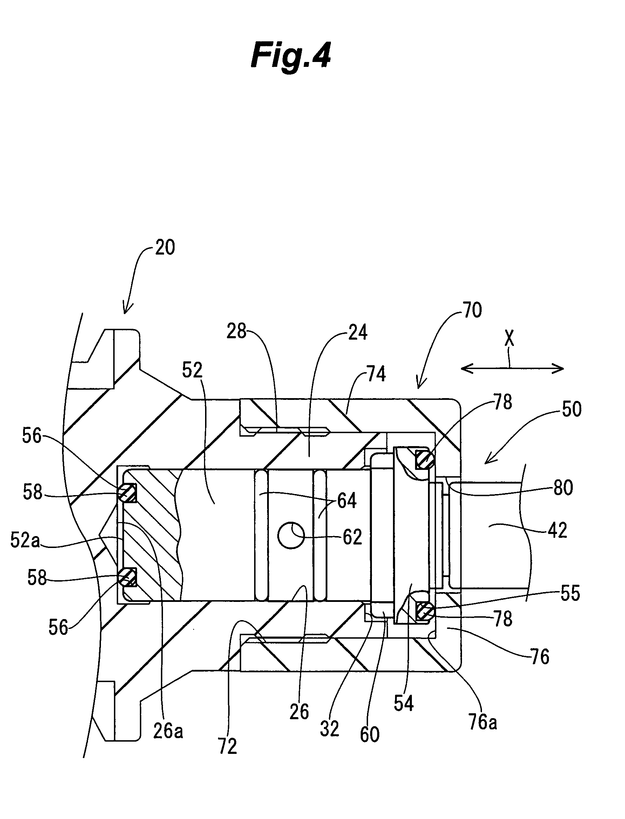

Further, although in the above-described embodiment, the flange portion 76 is arranged with the elastic member 78 brought into contact with the flange portion 54 of the tap collet 50 and the flange portion 76 of the fastening nut 70, as shown by Fig. 4, the flange portion 54 may be provided with a recessed portion 55 for fitting the elastic member 58.

### Brief Description of the Drawings

[Fig.1]
   Fig.1 is a sectional view of a tap holder according to an embodiment of the invention.
[Fig.2]
   Fig.2 is a sectional view enlarging an essential portion of the tap holder according to the embodiment of the invention.
[Fig.3]
   Fig.3 is a disassembled view of the tap holder according to the embodiment of the invention.
[Fig.4]
   Fig.4 is a sectional view enlarging an essential portion of a tap holder according to a modified example of the invention.

### Description of Reference Numerals and Signs

1.. spindle
10..tap holder
20..tapper body
22..shank portion
24..outer cylinder portion
26..attaching hollow portion
40..tap
42..tap holding member
50..tap collet
52..shaft portion
54..flange portion
58, 78..elastic members
70..fastening nut
72..female screw portion
74..nut body
76..flange portion
80..through hole
82..recessed portion

## Claims

1. A tap holder including a tap collet for chucking a tap at one end thereof, comprising:
a tapper body formed with an attaching hollow portion for inserting other end of the tap collet,
the tap collet inserting the tapper body,
a fastening nut for pressing the tap collet to the attaching hollow portion to be fixed to the tapper body by being screwed with the tapper body and engaged with an end face on one end side of the tap collet, and attached to a machine tool having a tap synchronizingly feeding mechanism,
wherein the tap collet is squeezed by a bottom face of the attaching hollow portion and the fastening nut by way of an elastic member in an axial direction.

2. The tap holder according to Claim 1, wherein: hardnesses of an elastic member interposed between the tap collet and a bottom face of the attaching hollow portion and the elastic member interposed between the tap collet and the fastening nut differ from each other.

3. The tap holder according to Claim 1 or 2, further wherein: the elastic members are interchangeably arranged.
